Europäisches Patentamt

European Patent Office

Office européen des brevets

(19)

(11) **EP 0 640 910 B1**

## (12) FASCICULE DE BREVET EUROPEEN

(45) Date de publication et mention
de la délivrance du brevet:
**01.03.2000 Bulletin 2000/09**

(51) Int Cl.⁷: **G06F 5/06**

(21) Numéro de dépôt: **94401779.7**

(22) Date de dépôt: **02.08.1994**

(54) **Procédé de commande d'un circuit du type premier entré - premier sorti et dispositif pour sa mise en oeuvre**

Verfahren zur Steuerung einer FIFO-Schaltung und Einrichtung zu seiner Durchführung

Control process for a first in - first out circuit and device to carry it out

(84) Etats contractants désignés:
**DE ES FR GB IT**

(30) Priorité: **24.08.1993 FR 9310204**

(43) Date de publication de la demande:
**01.03.1995 Bulletin 1995/09**

(73) Titulaire: **THOMSON multimedia
92648 Boulogne Cédex (FR)**

(72) Inventeurs:
• **Yassa, Fathy
F-92402 Courbevoie Cédex (FR)**
• **Charlot, Didier
F-92402 Courbevoie Cédex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**EP-A- 0 312 914          US-A- 4 903 285**

• **PROCEEDING OF MELECON 83
MEDITERRANEAN ELECTROTECHNICAL
CONFERENCE, vol.B3, no.04, Mai 1983,
ATHENS, GREECE pages 1 - 2, XP11402
KANOPOULOS 'Design and implementation of a
40-by-20 bit self-checking first-in-first-out
memory (FIFO) for a VLSI system'**

**Description**

La présente invention concerne un procédé de commande d'un circuit du type premier entré - premier sorti, plus particulièrement connu sous le terme "circuit FIFO" (pour First in, First out en langue anglaise), ce circuit FIFO permettant de gérer un nombre important de données. La présente invention concerne aussi un dispositif pour la mise en oeuvre de ce procédé.

Le procédé et le dispositif de commande du circuit FIFO, conformes à la présente invention, ont été développés pour gérer un circuit permettant de stocker une ligne complète d'un signal vidéo dans le cadre d'un signal HD MAC. Toutefois, il est évident pour l'homme de l'art que ce circuit FIFO peut être utilisé dans d'autres applications.

Ainsi, dans le cadre d'une image HD MAC, une ligne vidéo comporte en général 1 296 mots de 9 bits qui doivent être sur-échantillonnés de manière à respecter le théorème de Shanon. En conséquence, pour traiter une ligne vidéo HD MAC, il faut pouvoir stocker au moins 2 592 mots de 9 bits dans un circuit qui doit être écrit à 40,5 MHz. D'autre part, pour effectuer un certain nombre de traitements ou de corrections sur le signal vidéo ainsi stocké, il est nécessaire de l'envoyer vers un micro-contrôleur externe. Cet envoi se fait en général par l'intermédiaire d'un bus dont la vitesse d'échange de données est comprise entre 100 K bits par seconde et 400 K bits par seconde pour les plus rapides. La lecture s'effectue donc à une vitesse bien plus lente que l'écriture. Dans ce cas, différents circuits peuvent être utilisés pour stocker la ligne vidéo. Notamment, on peut utiliser un circuit mémoire de type RAM avec des entrées démultiplexées et des sorties multiplexées de manière à obtenir une écriture à 40,5 MHz. Toutefois, la gestion des entrées démultiplexées et des sorties multiplexées est complexe et nécessite l'utilisation de plusieurs signaux d'horloge différents. De plus, cette partie nécessite, pour sa réalisation, un nombre important de transistors.

En conséquence, pour stocker une ligne vidéo de type HD MAC, l'on a pensé à utiliser un circuit type premier entré - premier sorti réalisé par des registres à décalage Toutefois, l'utilisation de registres à décalage comme circuit de mémorisation nécessite l'emploi de deux étages pour une information à stocker de manière à ne pas perdre cette information. Il faut donc doubler la capacité du registre à décalage.

Le document US-A-4 903 285 résoud partiellement ce problème en proposant une structure de registre à décalage permettant de stocker N bits en utilisant moins de 2xN bascules. La structure proposée comporte Nxm/(m-1) bascules et est commandée par une série de signaux d'horloge à m phases, m étant un nombre pair supérieur à 2. Cependant, cette structure n'est pas satisfaisante car elle nécessite l'utilisation d'un nombre important de signaux d'horloge et, même si elle permet de réduire le nombre de bascules, ce nombre reste encore supérieur au nombre de bits d'information à stocker.

La présente invention a pour but de remédier à cet inconvénient en proposant un procédé de commande particulier pour un circuit du type premier entré - premier sorti constitué par des registres à décalage permettant de stocker un nombre important de mots avec une vitesse d'accès très rapide et une lecture plus lente.

En conséquence, la présente invention a pour objet un procédé de commande d'un circuit du type premier entré - premier sorti permettant de gérer m mots de n bits (m grand et n ≥ 1), ledit circuit comportant m étages en série, chacun des étages comprenant n points-mémoires montés en parallèle, les étages pairs étant commandés par un premier signal d'horloge et les étages impairs par un second signal d'horloge, les signaux d'horloge ne se chevauchant pas, ledit procédé comportant :

- une première étape d'écriture dans laquelle chaque mot est écrit, en fonction des signaux d'horloge, dans deux étages successifs, cette première étape se terminant lorsque m/2 mots sont écrits :
- une deuxième étape d'écriture dans laquelle à chaque signal d'horloge, on interdit successivement l'écriture dans le m$^{ième}$ étage jusque dans le premier étage, l'écriture étant réalisée selon la première étape dans les étages non encore interdits, et
- une étape de lecture consistant à décaler successivement les mots d'un étage dans l'autre à chaque signal d'horloge, la lecture d'un mot étant réalisée à la fin du décalage.

Dans ce cas on obtient donc une lecture à une vitesse plus lente que la vitesse d'écriture dans le registre à décalage.

La présente inventiona aussi pour objet un procédé de commande d'un circuit du type premier entré-premier sorti permettant de gérer m mots de n bits (m grand et n ≥ 1), utilisant un circuit tel que décrit ci-dessus dans lequel les deux étapes d'écriture sont identiques aux étapes d'écriture décrites ci-dessus, mais dans lequel l'étape de lecture consiste à décaler successivement les mots d'un étage dans l'autre à chaque signal d'horloge, la lecture étant réalisée sur l'étage de sortie tous les deux signaux d'horloge.

Ceci permet de réaliser une lecture à la même vitesse que l'écriture dans le circuit de type premier entré - premier sorti.

De préférence, le premier et le second signal d'horloge correspondent aux deux phases d'un même signal d'horloge, ces deux phases ne se chevauchant pas et le signal d'horloge a en général une fréquence supérieure au MHz, de préférence une fréquence de 40,5 MHz.

Selon une autre caractéristique de la présente invention, durant une étape de lecture, les étapes d'écriture ne sont pas autorisées. De préférence, les étapes d'écriture et de lecture sont séparées dans le temps. Toutefois, l'étape de lecture peut être initialisée pendant la seconde étape d'écriture.

Selon un mode de réalisation préférentiel de la présente invention, l'autorisation d'écriture dans un étage du registre à décalage est donnée par la formule suivante :

$$\underline{L} = 1 \text{ si } \varnothing . (Suiv + W_0) = 1$$

dans laquelle $\underline{L}$ représente la valeur d'un circuit "LATCH", $\varnothing$ représente les phases $\varnothing 1$ ou $\varnothing 2$ du signal d'horloge selon qu'il s'agit d'un étage pair ou impair, $W_0$ l'impulsion de validation d'écriture pendant la première étape d'écriture, Suiv le signal d'autorisation de l'étage suivant et . et + les opérations logiques, le dernier étage étant initialisé par la valeur $W_0 + R = 1$ où R représente le signal de lecture.

La présente invention a aussi pour objet un dispositif pour la mise en oeuvre du procédé ci-dessus, caractérisé en ce que les étages impairs et les étages pairs sont connectés aux signaux d'horloge de telle sorte que les étages impairs reçoivent le premier signal d'horloge sur leur première entrée et le second signal d'horloge sur leur deuxième entrée tandis que les étages pairs reçoivent le second signal d'horloge sur leur première entrée et le premier signal d'horloge sur leur deuxième entrée, les étages impairs recevant une impulsion Wo$\varnothing 1$ inversée et les étages pairs une impulsion Wo$\varnothing 2$ inversée dans laquelle Wo représente une impulsion de validation d'écriture, une impulsion R de validation de lecture étant appliquée sur le dernier étage du registre à décalage.

D'autres caractéristiques et avantages de la présente invention apparaîtront à la lecture de la description détaillée faite ci-après d'un mode de réalisation, cette description étant faite avec référence aux dessins ci-annexés dans lesquels :

- la figure 1 est une vue schématique représentant, en fonction du signal d'horloge, la première étape d'écriture dans un registre à décalage réalisant un circuit FIFO conformément à la présente invention,

- la figure 2 est une vue schématique identique à celle de la figure 1 représentant la seconde étape d'écriture,

- la figure 3 est une vue schématique identique à celle de la figure 1 représentant une étape de lecture,

- la figure 4 est un schéma électrique simplifié d'un mode de réalisation du circuit de commande permettant la mise en oeuvre du procédé, et

- la figure 5 est un schéma électrique simplifié d'un étage du circuit de commande.

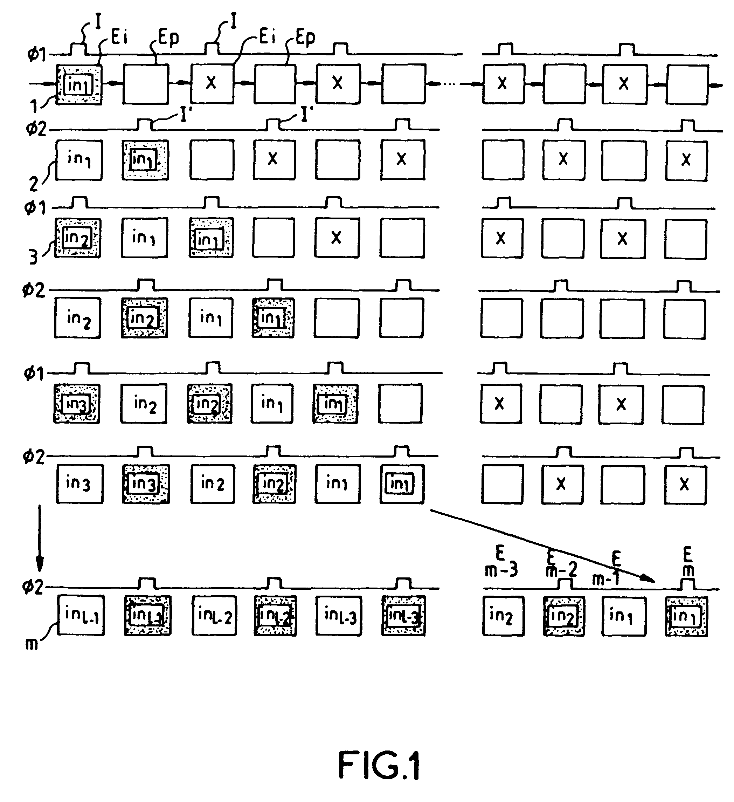

La présente invention sera décrite en se référant au stockage d'une ligne vidéo HD MAC suréchantillonnée comportant 2 592 mots de 9 bits. Pour stocker cette ligne vidéo, on utilise, dans le cadre de la présente invention, un circuit de type premier entré - premier sorti ou circuit FIFO permettant de stocker m mots de n bits dans laquelle m = 2 592 et n = 9. Dans le cadre de la présente invention, le circuit FIFO est un circuit constitué par des registres à décalage comportant m étages, n registres à décalages étant montés en parallèle et recevant les mêmes signaux d'horloge, comme cela sera expliqué ci-après. De ce fait, le circuit FIFO comporte m x n points-mémoire statiques. Le procédé de commande de ce circuit du type premier entré - premier sorti sera décrit en se référant aux figures 1 à 3.

Sur ces figures, les m carrés référencés $E_i$, $E_p$ (i = impair, p = pair); $E_{m-3}$, $E_{m-2}$, $E_{m-1}$, $E_m$, dans le sens horizontal représentent les m étages appelés aussi points-mémoire d'un registre à décalage tandis que les carrés dans le sens vertical représentent l'évolution du registre à décalage en fonction des m phases d'horloge nécessaires à l'écriture des m étages du registre à décalage. Dans le cadre de la présente invention, les étages impairs sont validés lors du signal d'horloge $\varnothing 1$ tandis que les étages pairs sont validés lors du signal d'horloge $\varnothing 2$. En fait, les signaux d'horloge $\varnothing 1$ et $\varnothing 2$ représentent les deux phases d'un même signal d'horloge qui, dans le cas du traitement d'un signal vidéo de type HD MAC, est un signal à 40,5 MHz. Dans le cadre de la présente invention, les phases $\varnothing 1$ et $\varnothing 2$ ne se recouvrent pas et elles sont appliquées sur les registres montés en parallèle.

On expliquera tout d'abord en se référant à la figure 1, le mode de fonctionnement de la première étape d'écriture. Cette étape d'écriture est de type classique et utilise pour son fonctionnement deux étages du registre à décalage pour écrire 1 bit de données. Ainsi, pour écrire les n bits du premier mot référencé in$_1$ dans le premier étage des n registres à décalage connectés en parallèle lors de la phase $\varnothing 1$, on ouvre l'ensemble des étages impairs référencés $E_i$, comme représenté sur la ligne 1, ce qui permet donc d'entrer l'information in$_1$ dans le premier étage des n registres en parallèle. Puis lors de la phase $\varnothing 2$ du signal d'horloge, les étages pairs référencés $E_p$ des registres

à décalage sont ouverts avec l'impulsion I' et l'information $in_1$ est transférée du premier étage impair $E_i$ dans l'étage pair $E_p$ suivant, tout en restant dans l'étage impair précédent comme représenté sur la ligne 2 de la figure 1 . Lors de la phase d'horloge $\varnothing$ 1 suivante, les étages impairs sont à nouveau ouverts entraînant l'écriture de l'information $in_1$ dans l'étage impair suivant et l'écriture de l'information $in_2$ dans le premier étage impair $E_i$, comme représenté sur la ligne 3 de la figure 1. L'écriture se continue de la même manière en fonction des phases $\varnothing$ 2 puis $\varnothing$ 1 du signal d'horloge. Cette opération est répétée jusqu'à ce que l'information $in_{l-1}$ correspondant aux I - 1 $^{ième}$ mot soit écrite dans le premier étage impair et le premier étage pair comme représenté sur la ligne m de la figure 1. Dans ce cas, I - 1 correspond à m/2, m représentant le nombre de mots à écrire soit 2 592 dans le cadre de la présente invention.

De ce fait, le dernier étage du registre à décalage, à savoir l'étage $E_m$ est écrit avec les bits correspondant au premier mot, à savoir, le mot $in_1$, l'étage $E_m$ - 1 est lui aussi écrit avec le mot $in_1$ tandis que les étages $E_{m-2}$ et $E_{m-3}$ sont écrits avec le mot $in_2$ et ainsi de suite comme représenté sur la ligne m.

Suite à cette première étape d'écriture, on a donc stocké dans le circuit FIFO considéré m/2 x n bits, soit 1 296 mots de 9 bits dans le cadre d'un signal vidéo de type HD MAC. On remarque donc que le premier mot entré se trouve alors stocké dans les deux derniers étages du circuit de type FIFO, le second mot dans les deux étages précédents, etc. comme expliqué ci-dessus.

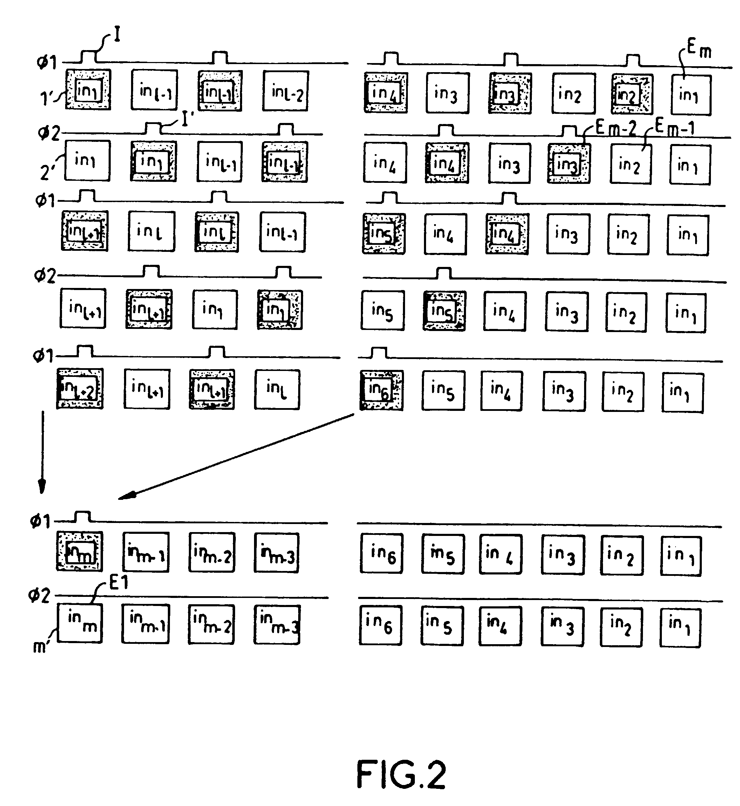

Suite à cette étape d'écriture, on réalise une seconde étape d'écriture permettant de comprimer l'ensemble des données déjà écrites dans les registres à décalage et d'écrire les mots suivants. Cette deuxième étape est représentée schématiquement à la figure 2. Cette seconde étape consiste principalement à interdire l'écriture au niveau du dernier étage écrit dans le circuit de type FIFO. Ainsi, comme représenté sur la figure 2, on commence tout d'abord par interdire l'écriture dans le dernier étage du registre à décalage, à savoir l'étage Em qui contient l'information $in_1$. Ainsi, à la première phase $\varnothing$ 1 du signal d'horloge lors de la deuxième étape d'écriture, le dernier étage Em est interdit, mais l'étage $E_{m-1}$ est validé par l'impulsion I et on y écrit l'information du mot précédent $in_2$ Cette opération d'écriture est aussi réalisée dans tous les étages de même rang antérieurs. De plus, le premier étage reçoit l'information $in_l$, comme représenté sur la ligne 1' de la figure 2. Ainsi, seul l'étage $E_m$ est interdit, l'écriture dans les autres étages étant réalisée comme dans la première étape d'écriture. Lors de la phase $\varnothing$ 2 suivante, on interdit l'écriture dans l'étage $E_{m-1}$ qui contient l'information $in_2$, mais on écrit dans l'étage $E_{m-2}$ l'information du mot précédent, à savoir l'information $in_3$, comme représenté sur la ligne 2' et ainsi de suite pour tous les étages de même rang, l'information $in_l$ étant maintenue dans le premier étage et écrite dans l'étage suivant. Lors de la phase $\varnothing$ 1 suivante, l'étage $E_{m-2}$ est interdit, les étages $E_{m-1}$ et $E_m$ restant eux aussi interdits. Les étages précédants sont écrits conformément au procédé de la première étape d'écriture et le premier étage reçoit l'information du mot suivant $in_{l+1}$ et ainsi de suite. De la même manière, on interdit, phase d'horloge après phase d'horloge, l'écriture dans les différents étages des registres à décalage jusqu'au premier étage $E_1$ qui, à ce moment, contient l'information $in_m$. De ce fait, lorsqu'on se trouve sur la ligne référencée m', m' correspondant à m, chaque étage du registre à décalage comporte une information correspondant à un des m mots à stocker. Ce procédé particulier d'écriture permet d'utiliser des registres à décalage comportant un nombre d'étages égal au nombre de mots à écrire, c'est à dire un circuit de type FIFO ayant une capacité de stockage de 1 point mémoire par bit. Ceci est particulièrement intéressant lorsque le nombre de mots à stocker est très important, comme dans le cas d'une ligne vidéo du type HD MAC.

Bien entendu, dans le cas du circuit décrit ci-dessus, il est évident pour l'homme de l'art que le système doit comporter un signal indiquant que la moitié des mots a été écrite dans le circuit de type FIFO. Si ce type de signal n'existe pas, on peut utiliser pour la première étape d'écriture un signal d'autorisation d'écriture des mots d'un étage dans l'autre, phase après phase du signal d'horloge, qui commencerait avec le premier mot pour se terminer avec le dernier mot.

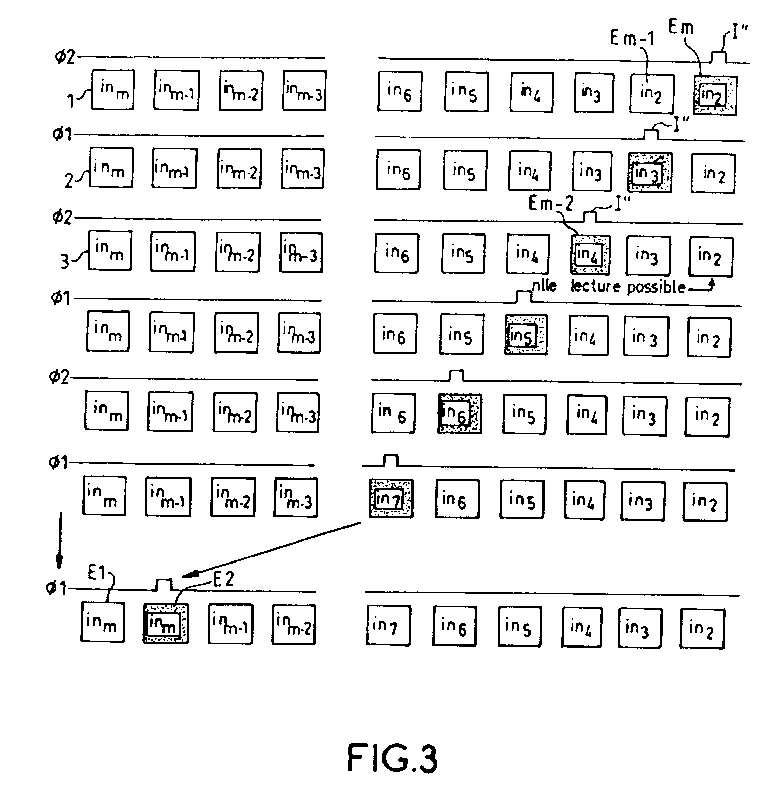

On décrira maintenant, avec référence plus particulièrement à la figure 3, un premier mode de réalisation de l'étape de lecture. Comme représenté sur la figure 2, on voit qu'à la fin de la seconde étape d'écriture le dernier étage du registre à décalage comporte le premier mot stocké, à savoir l'information $in_1$. Ce mot est donc directement lisible en sortie. Lorsque ce mot est lu, il faut alors amener dans l'étage $E_m$, le mot précédent, à savoir l'information $in_2$. Pour ce faire, il faut décaler le contenu de l'avant dernier étage, à savoir l'étage $E_{m-1}$, dans le dernier étage $E_m$. Pour obtenir ce décalage, on ouvre puis l'on ferme un par un tous les étages du registre à décalage de l'étage $E_m$ jusqu'à l'étage $E_1$. Cette opération est réalisée à chaque phase d'horloge. Ainsi, lors de la première phase $\varnothing$ 1, l'étage $E_{m-1}$ est ouvert, puis à la phase $\varnothing$ 2 suivante l'étage $E_{m-2}$ est ouvert et ainsi de suite jusqu'au premier étage. L'ouverture d'un étage est réalisée lorsqu'il reçoit l'impulsion I". Lorsque les m cycles ont été exécutés, l'étage $E_m$ contient l'information $in_2$, à savoir l'information correspondant au deuxième mot qui peut être lu et les étages précédents contiennent les informations $in_3$ à $in_m$ correctement décalées. Dans ce cas, la lecture est réalisée à une vitesse bien plus lente que l'écriture.

Toutefois, si l'on examine la figure 3, on s'aperçoit qu'à la phase d'horloge $\varnothing$ 2 correspondant à la ligne 3, on a déjà dans l'étage Em de sortie l'information $in_2$ et qu'il est possible, à ce moment là, de réaliser une lecture du deuxième mot stocké. En conséquence, il est possible toutes les deux phases d'horloge de recommencer à lire l'information sur le dernier étage du circuit de type FIFO. De ce fait, selon une variante de réalisation de la présente invention, il est possible de réaliser une lecture tous les cycles, ce qui permet d'accélérer la vitesse de lecture.

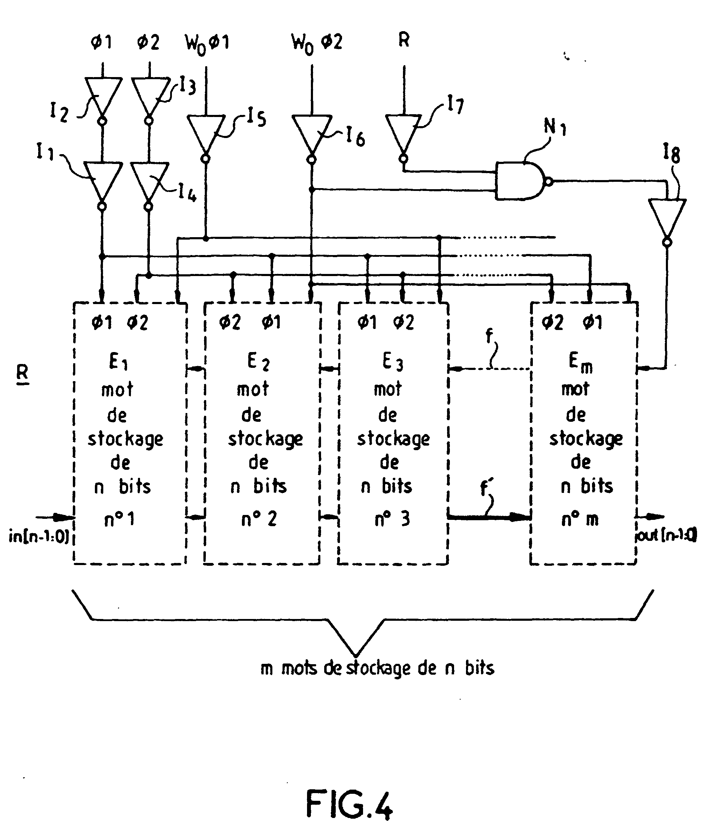

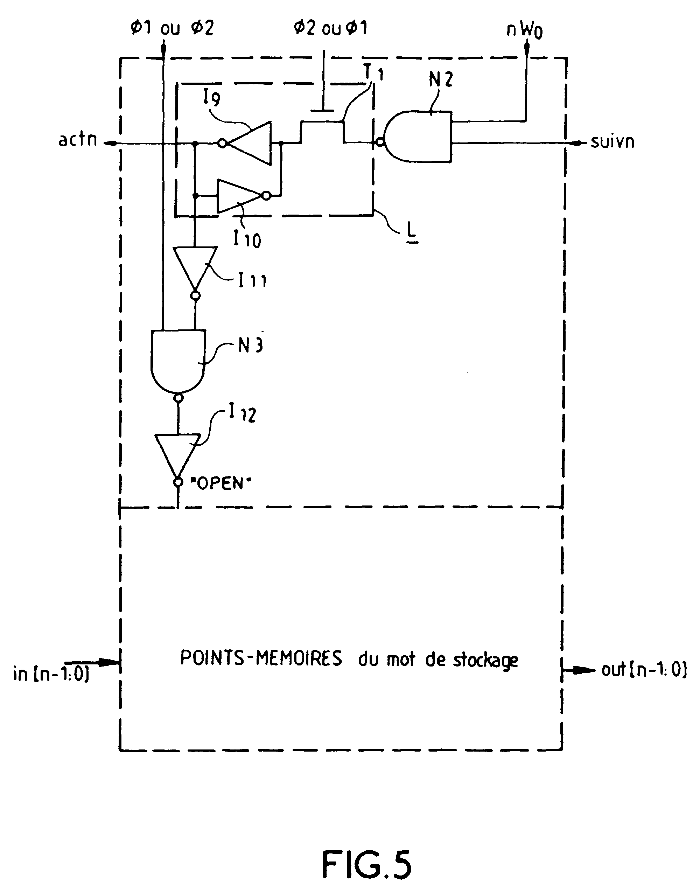

On décrira maintenant, avec référence aux figures 4 et 5, un mode de réalisation possible pour les différents circuits permettant la mise en oeuvre du procédé de commande conforme à la présente invention. Comme représenté sur la figure 5 qui concerne un étage d'un registre à décalage à m étages, le décalage de l'information d'un étage dans l'étage suivant symbolisé par les flèches in [n-1 ; 0] et out [n-1 ; 0] est autorisé par une impulsion "OPEN". Lorsque cette impulsion est à 0, chaque étage garde son information, cela correspond à une interdiction d'écriture et lorsque cette impulsion est à 1, l'étage prend la valeur de l'étage précédent, ce qui correspond à une autorisation d'écriture.

Comme représenté sur la figure 4, un registre à décalage R pour la mise en oeuvre du procédé de la présente invention comporte m étages $E_1$ à $E_m$ en série. Ces étages reçoivent, sur des premières et secondes entrées, les impulsions d'horloge $\varnothing 1$, $\varnothing 2$. Comme représenté sur la figure 4, les étages impairs $E_1$, $E_3$, et les étages pairs $E_2$, $E_m$ sont connectés aux phases $\varnothing 1$ et $\varnothing 2$ de telle sorte que les étages impairs reçoivent $\varnothing 1$ sur leur première entrée et $\varnothing 2$ sur leur deuxième entrée, tandis que les étages pairs reçoivent $\varnothing 2$ sur leur première entrée et 0 1 sur leur deuxième entrée. Comme représenté sur la figure 4, les phases $\varnothing 1$ et $\varnothing 2$ sont entrées sur les différents étages du registre à décalage par l'intermédiaire des inverseurs en série $I_1$ et $I_2$ et respectivement $I_3$ et $I_4$.

D'autre part, les étages impairs reçoivent un signal $W_0$ $\varnothing 1$ inversé par l'inverseur $I_5$, tandis que les étages pairs reçoivent un signal $W_0$ $\varnothing 2$ inversé par l'inverseur $I_6$, le signal $W_0$ validant la première étape d'écriture. $W_0$ $\varnothing 1$ et $W_0$ $\varnothing 2$ sont identiques fonctionnellement à $W_0$, mais décalés d'une phase l'un par rapport à l'autre. De plus, un signal R valide l'étape de lecture. Ce signal R est envoyé dans un inverseur $I_7$ dont la sortie est envoyée en entrée d'une porte NAND $N_1$ dont l'autre entrée reçoit le signal $W_0$ $\varnothing 2$ inversé. La sortie de la porte NAND $N_1$ est envoyée sur l'inverseur $I_8$ dont la sortie est envoyée en entrée du dernier étage $E_m$ des registres à décalage. Cette impulsion de lecture se propage du dernier étage $E_m$ des registres à décalage vers le premier étage $E_1$ des registres à décalage comme représenté par le flèche f, tandis que les données rentrées dans le premier étage des registres à décalage se propagent vers le dernier étage $E_m$ des registres à décalage comme représenté par la flèche f'.

On décrira maintenant, avec référence à la figure 5, un mode de réalisation particulier du circuit de commande associé à chaque étage d'un registre à décalage. Le circuit de commande associé à chaque étage d'un registre à décalage permet d'obtenir l'impulsion "OPEN", cette impulsion étant à 0 dans le cas d'une interdiction d'écriture et à 1 dans le cas d'une autorisation d'écriture. Comme représenté sur la figure 5, le circuit de commande associé à chaque étage ou point mémoire comporte tout d'abord un NAND $N_2$ qui reçoit sur une entrée l'impulsion de lecture Suiv n issue de l'étage suivant et sur son autre entrée l'impulsion n $W_0$ qui correspond soit à $W_0$ $\varnothing 1$ ou $W_0$ $\varnothing 2$ suivant que l'étage est pair ou impair, $W_0$ étant l'impulsion qui valide la première phase d'écriture dans le circuit de type FIFO. La sortie de NAND $N_2$ est envoyée à l'entrée du circuit "LATCH" <u>L</u>. L'horloge du "LATCH" L est connectée aux impulsions de commande $\varnothing 1$ ou $\varnothing 2$ selon que l'étage est pair ou impair, comme représenté sur la figure 4, le circuit "LATCH" L comporte un transistor $T_1$ de type MOS recevant sur sa grille soit l'impulsion $\varnothing 1$, soit l'impulsion $\varnothing 2$ et un premier inverseur $I_9$ sur lequel est rebouclé un second inverseur $I_{10}$.

La sortie du circuit "LATCH" <u>L</u> est envoyée respectivement soit vers l'étage précédent où il fournit une impulsion référencée ACTN fonction de l'impulsion de lecture soit en entrée d'un inverseur $I_{11}$. La sortie de l'inverseur est envoyée sur une entrée d'un circuit NAND $N_3$ qui reçoit sur son autre entrée soit l'impulsion 0 1 soit l'impulsion $\varnothing 2$ selon que l'étage est pair ou impair. La sortie du circuit NAND $N_3$ est envoyée sur un inverseur $I_{12}$ dont la sortie donne l'impulsion "OPEN" autorisant ou interdisant l'écriture dans l'étage correspondant du registre à décalage.

Dans ce circuit, la valeur du "LATCH" <u>L</u> indique si l'on écrit le mot de stockage précédent dans l'étage courant à la prochaine phase d'horloge.

Le "LATCH" prend la valeur 1 si :

- on se trouve dans la première étape d'écriture pour laquelle l'impulsion $W_0$ = 1 et W = 1, W signifiant que l'écriture est autorisée dans tous les cas ;
- on se trouve dans la seconde phase d'écriture pour laquelle W = 1 et $W_0$ = 0, de plus le "LATCH" <u>L</u> de l'étage suivant est à 1. (Ceci signifie que l'écriture est autorisée si l'étage suivant n'est pas déjà interdit d'écriture) ;
- on ne se trouve pas dans une étape d'écriture et le "LATCH" <u>L</u> de l'étage suivant est à 1, ce qui correspond à une lecture déjà effectuée.

Les conditions ci-dessus peuvent être symbolisées par l'équation suivante :

$$\underline{L} = 1 \text{ si } \varnothing.(W.W_0/W.\overline{W}_0\text{suiv}/.\overline{W}.\text{suiv}) = 1$$

dans laquelle :

$\varnothing$ représente suivant que l'étage est pair ou impair l'impulsion $\varnothing 1$ ou $\varnothing 2$

W représente les deux phases d'écriture

$W_0$ représente la première phase d'écriture

$W.W_0 = W_0$ représente la première phase d'écriture

$W.\overline{W}_0$ représente la deuxième phase d'écriture

suiv représente l'impulsion issue de l'étage suivant,

$\overline{W}$ représente la phase de non écriture (lecture possible)

$\overline{W}$.suiv représente donc une lecture.

le point représente la multiplication logique et la barre oblique un OU logique.

L'équation ci-dessus peut-être simplifiée de la manière suivante :

$$\underline{L} = 1 \text{ si } \varnothing. (suiv / W. W_0) = 1$$

Soit encore, $\underline{L} = 1$ si $\varnothing.$ (suiv/$W_0 = 1$, car $W_0.W = W_0$

Le circuit de commande tel que représenté à la figure 5 permettant la mise en oeuvre de l'équation ci-dessus a l'avantage de pouvoir être réalisé avec 17 transistors. Ceci permet d'obtenir un circuit de commande de structure moins complexe que dans le cas de l'utilisation d'un circuit RAM avec des entrées et des sorties mutiplexées et démultiplexées.

On expliquera maintenant, de manière plus détaillée, le fonctionnement du circuit de la figure 5 lors des différentes étapes d'écriture et de lecture. Au début de la première étape d'écriture, l'impulsion $W_0$ passe à 1 de telle sorte qu'à chaque impulsion $\varnothing 1$, $W_0 \varnothing 1$ passe à 1 et à chaque impulsion $\varnothing 2$, $W_0 \varnothing 2$ passe à 1. A ce moment les différentes valeurs stockées dans les étages des registres à décalage peuvent se propager de la manière représentée dans le tableau A ci-après.

TABLEAU A

| $\underline{L}_1$ | $\underline{L}_2$ | $\underline{L}_3$ | $\underline{L}_4$ | $\underline{L}_{m-2}$ | $\underline{L}_{m-1}$ | $\underline{L}_m$ | |
|---|---|---|---|---|---|---|---|
| **0** (X) | 0 (X) | **0** (X) | 0 (X) | 0 (X) | **0** (X) | 0 (X) | $\varnothing 1 . W_0 = 0$ |
| 0 (X) | **0** (X) | 0 (X) | **0** (X) | **0** (X) | 0 (X) | **0** (X) | $\varnothing 2 . W_0 = 0$ |
| **0** (X) | 0 (X) | **0** (X) | 0 (X) | 0 (X) | **0** (X) | 0 (X) | $\varnothing 1 . W_0 = 1$ |
| | | | | | | | $W_0 \varnothing 1$ passe à 1 |
| 1 (X) | **0** (X) | 1 (X) | **0** (X) | **0** (X) | 1 (X) | **0** (X) | $\varnothing 2 . W_0 = 1$ |
| | | | | | | | $W_0 \varnothing 2$ passe à 1 |
| **1** ($in_1$) | 1 (X) | **1** (X) | 1 (X) | 1 (X) | **1** (X) | 1 (X) | $\varnothing 1 . W_0 = 1$ |
| 1 ($in_1$) | **1** ($in_1$) | 1 (X) | **1** (X) | **1** (X) | 1 (X) | **1** (X) | $\varnothing 2 . W_0 = 1$ |
| **1** ($in_2$) | 1 ($in_1$) | **1** ($in_1$) | 1 (X) | 1 (X) | **1** (X) | 1(X) | $\varnothing 1 . W_0 = 1$ |
| 1 ($in_2$) | **1** ($in_2$) | 1 ($in_1$) | **1** ($in_1$) | **1** (X) | 1 (X) | **1** (X) | $\varnothing 2 . W_0 = 1$ |
| **1** ($in_{l-2}$) | 1 ($in_{l-3}$) | **1** ($in_{l-3}$) | 1 ($in_{l-4}$) | 1 (X) | **1** (X) | 1 (X) | $\varnothing 1 . W_0 = 1$ |
| 1 ($in_{l-2}$) | 1 ($in_{l-2}$) | 1 ($in_{l-3}$) | 1 ($in_{l-3}$) | **1** ($in_1$) | 1 (X) | 1 (X) | $\varnothing 2 . W_0 = 1$ |
| **1** ($in_{l-1}$) | 1 ($in_{l-2}$) | **1** ($in_{l-2}$) | 1 ($in_{l-3}$) | 1 ($in_1$) | **1** ($in_1$) | 1 (X) | $\varnothing 1 . W_0 = 1$ |
| 1($in_{l-1}$) | **1** ($in_{l-1}$) | 1 ($in_{l-2}$) | **1** ($in_{l-2}$) | **1** ($in_2$) | 1 ($in_1$) | **1** ($in_1$) | $\varnothing 2 . W_0 = 0$ |
| | | | | | | | $W_0 \varnothing 2$ passe à 0 |

Dans ce tableau $\underline{L}_1$ ; $\underline{L}_2$ ; $\underline{L}_3$ : $\underline{L}_4$ : $\underline{L}_{m-2}$ ; $\underline{L}_{m-1}$ ; $\underline{L}_m$ ; représentent la valeur du latch dans le circuit 5, cette valeur étant en gras lorsque le circuit est actif, c'est-à-dire que l'impulsion "OPEN" est à 1. Dans cette phase d'écriture, l'impulsion R est à 0. De plus, entre parenthèses, on trouve la valeur du mot contenu dans le registre correspondant.

A la fin de cette première étape d'écriture, l'impulsion $W_0$ passe alors à 0 de telle sorte qu'à l'impulsion $\varnothing 2$ suivante, $W_0 \varnothing 2$ passe à 0 et à l'impulsion $\varnothing_1$ suivante, $W_0 \varnothing 1$ passe à 0. On se trouve alors en début de phase de compression, cette phase de compression se terminera dès que le "LATCH" L du premier étage aura pris la valeur 0. Le début de la seconde étape d'écriture est représentée dans le tableau B ci-après

TABLEAU B

| DEBUT DE COMPRESSION | | | | | | | |
|---|---|---|---|---|---|---|---|
| $L_1$ | $L_2$ | $L_3$ | $L_4$ | $L_{m-2}$ | $L_{m-1}$ | $L_m$ | |
| **1** ($in_l$) | 1 ($in_{l-1}$) | **1** ($in_{l-1}$) | 1 ($in_{l-2}$) | 1 ($in_2$) | **1** ($in_2$) | 0 ($in_1$) | $\emptyset\,1\,.\,W_0 = 0$ <br> $W_0\,\emptyset\,1$ passe à 0 |
| 1 ($in_l$) | **1** ($in_l$) | 1 ($in_{l-1}$) | **1** ($in_{l-2}$) | **1** ($in_3$) | 0 ($in_2$) | **0** ($in_1$) | $\emptyset\,2\,.\,W_0 = 0$ |
| **1** ($in_{l+1}$) | 1 ($in_l$) | **1** ($in_l$) | 1 ($in_{l-1}$) | 0 ($in_3$) | **0** ($in_2$) | 0 ($in_1$) | $\emptyset\,1\,.\,W_0 = 0$ |
| 1 ($in_{l+1}$) | **1** ($in_{l+1}$) | 1 ($in_l$) | **1** ($in_l$) | **0** ($in_3$) | 0 ($in_2$) | **0** ($in_1$) | $\emptyset\,2\,.\,W_0 = 0$ |

La fin de cette étape d'écriture est représentée par le tableau C.

TABLEAU C

| $L_1$ | $L_2$ | $L_3$ | $L_4$ | $L_{m-2}$ | $L_{m-1}$ | $L_m$ | |
|---|---|---|---|---|---|---|---|
| **1** ($in_{m-1}$) | 1 ($in_{m-2}$) | **1** ($in_{m-2}$) | 0 ($in_{m-3}$) | 0 ($in_3$) | **0** ($in_2$) | 0 ($in_1$) | $\emptyset\,1\,.\,W_0 = 0$ |
| 1 ($in_{m-1}$) | **1** ($in_{m-1}$) | 0 ($in_{m-2}$) | **0** ($in_{m-3}$) | **0** ($in_3$) | 0 ($in_2$) | **0** ($in_1$) | $\emptyset\,2\,.\,W_0 = 0$ |
| **1** ($in_m$) | 0 ($in_{m-1}$) | **0** ($in_{m-2}$) | 0 ($in_{m-3}$) | 0 ($in_3$) | **0** ($in_2$) | 0 ($in_1$) | $\emptyset\,1\,.\,W_0 = 0$ |
| 0 ($in_m$) | **0** ($in_{m-1}$) | 0 ($in_{m-2}$) | **0** ($in_{m-3}$) | **0** ($in_3$) | 0 ($in_2$) | **0** ($in_1$) | $\emptyset\,2\,.\,W_0 = 0$ |

L'ensemble des phases d'écriture est donc terminé et l'on retrouve bien une information correspondant à un mot dans chaque étage du registre à décalage. Dans le cadre de l'étape de lecture l'impulsion $W_0$ est égale à 0, mais une impulsion de lecture R est envoyée sur le dernier étage $E_m$, de manière à lire l'information dans cet étage lorsque $\emptyset 1\,R = 1$. Dans ce cas, on lit un mot isolé, puis l'on décale les informations contenues dans chaque étage du registre comme représenté sur le tableau D ci-après.

TABLEAU D

| $L_1$ | $L_2$ | $L_3$ | $L_4$ | $L_{m-2}$ | $L_{m-1}$ | $L_m$ | |
|---|---|---|---|---|---|---|---|
| **0** ($in_m$) | 0 ($in_{m-1}$) | **0** ($in_{m-2}$) | 0 ($in_{m-3}$) | 0 ($in_3$) | **0** ($in_2$) | 0 ($in_1$) | $\emptyset\,1\,.\,R = 0$ |
| 0 ($in_m$) | **0** ($in_{m-1}$) | 0 ($in_{m-2}$) | **0** ($in_{m-3}$) | **0** ($in_3$) | 0 ($in_2$) | **0** ($in_1$) | $\emptyset\,2\,.\,R = 0$ |
| **0** ($in_m$) | 0 ($in_{m-1}$) | **0** ($in_{m-2}$) | 0 ($in_{m-3}$) | 0 ($in_3$) | **0** ($in_2$) | 1 ($in_1$) | $\emptyset\,1\,.\,R = 1$ |
| 0 ($in_m$) | **0** ($in_{m-1}$) | 0 ($in_{m-2}$) | **0** ($in_{m-3}$) | **0** ($in_3$) | 1 ($in_2$) | **1** ($in_2$) | $\emptyset\,2\,.\,R = 0$ |
| **0** ($in_m$) | 0 ($in_{m-1}$) | **0** ($in_{m-2}$) | 0 ($in_{m-3}$) | 1 ($in_3$) | **1** ($in_3$) | 0 ($in_2$) | $\emptyset\,1\,.\,R = 0$ |
| 0 ($in_m$) | **0** ($in_{m-1}$) | 0 ($in_{m-2}$) | **0** ($in_{m-3}$) | **1** ($in_4$) | 0 ($in_3$) | **0** ($in_2$) | $\emptyset\,2\,.\,R = 0$ |
| **0** ($in_m$) | 0 ($in_{m-1}$) | **0** ($in_{m-2}$) | 1 ($in_{m-3}$) | 0 ($in_4$) | **0** ($in_3$) | 0 ($in_2$) | $\emptyset\,1\,.\,R = 0$ |
| 0 ($in_m$) | **0** ($in_{m-1}$) | 1 ($in_{m-2}$) | **1** ($in_{m-2}$) | **0** ($in_4$) | 0 ($in_3$) | **0** ($in_2$) | $\emptyset\,2\,.\,R = 0$ |
| **0** ($in_m$) | 1 ($in_{m-1}$) | **1** ($in_{m-1}$) | 0 ($in_{m-2}$) | 0 ($in_4$) | **0** ($in_3$) | 0 ($in_2$) | $\emptyset\,1\,.\,R = 0$ |
| 1 ($in_m$) | **1** ($in_m$) | 0 ($in_{m-1}$) | **0** ($in_{m-2}$) | **0** ($in_4$) | 0 ($in_3$) | **0** ($in_2$) | $\emptyset\,2\,.\,R = 0$ |
| **1** (X) | 0 ($in_m$) | **0** ($in_{m-1}$) | 0 ($in_{m-2}$) | 0 ($in_4$) | **0** ($in_3$) | 0 ($in_2$) | $\emptyset\,1\,.\,R = 0$ |
| 0 (X) | **0** ($in_m$) | 0 ($in_{m-1}$) | **0** ($in_{m-2}$) | **0** ($in_4$) | 0 ($in_3$) | **0** ($in_2$) | $\emptyset\,2\,.\,R = 0$ |

Une fois l'ensemble des opérations éffectué, on peut lire le mot $in_2$ sur le dernier étage.

Selon une variante, on peut aussi lire le mot suivant chaque cycle d'horloge (40,5 MHz), $\emptyset\,1\,.\,R$ étant positionné à 1 et ainsi de suite pour les mots suivants.

On a décrit ci-dessus un mode d'implémentation possible du procédé de la présente invention permettant entre autre d'utiliser un nombre réduit de transistors au niveau du circuit de commande.

**Revendications**

1. Procédé de commande d'un circuit du type premier entré - premier sorti permettant de gérer m mots de n bits, m grand et n ≥ 1, ledit circuit comportant m étages en série, chacun des étages comprenant n points-mémoires montés en parallèle, les étages pairs étant commandés par un premier signal d'horloge ($\varnothing$1) et les étages impairs par un second signal d'horloge ($\varnothing$2) les signaux d'horloge ne se chevauchant pas, ledit procédé comportant :

   - une première étape d'écriture dans laquelle chaque mot est écrit, en fonction des signaux d'horloge, dans deux étages successifs, cette première étape se terminant lorsque m/2 mots sont écrits ;
   - une deuxième étape d'écriture dans laquelle à chaque signal d'horloge, on interdit successivement l'écriture dans le m$^{\text{ième}}$ étage jusque dans le premier étage, l'écriture étant réalisée selon la première étape dans les étages non encore interdits, et
   - une étape de lecture consistant à décaler successivement les mots d'un étage dans l'autre à chaque signal d'horloge, la lecture d'un mot étant réalisée à la fin du décalage.

2. Procédé de commande d'un circuit du type premier entré - premier sorti permettant de gérer m mots de n bits, m grand et n ≥ 1, ledit circuit comportant m étages en série, chacun des étages comprenant n points-mémoires montés en parallèle, les étages pairs étant commandés par un premier signal d'horloge ($\varnothing$1) et les étages impairs par un second signal d'horloge ($\varnothing$2) les signaux d'horloge ne se chevauchant pas, ledit procédé comportant :

   - une première étape d'écriture dans laquelle chaque mot est écrit, en fonction des signaux d'horloge, dans deux étages successifs, cette première étape se terminant lorsque m/2 mots sont écrits ,
   - une deuxième étape d'écriture dans laquelle à chaque signal d'horloge, on interdit successivement l'écriture dans le m$^{\text{ième}}$ étage jusque dans le premier étage, l'écriture étant réalisée selon la première étape dans les étages non encore interdits, et
   - une étape de lecture consistant à décaler successivement les mots d'un étage dans l'autre à chaque signal d'horloge, la lecture étant réalisée sur l'étage de sortie tous les deux signaux d'horloge.

3. Procédé selon l'une quelconque des revendications 1 ou 2, caractérisé en ce que le premier ($\varnothing$1) et le second ($\varnothing$2) signal d'horloge correspondent aux deux phases d'un même signal d'horloge.

4. Procédé selon la revendication 3, caractérisé en ce que le signal d'horloge à une fréquence supérieure au MHz, de préférence une fréquence de 40,5 MHz.

5. Procédé selon l'une quelconque des revendications 1 à 4, caractérisé en ce que, durant une étape de lecture, les étapes d'écriture ne sont pas autorisées.

6. Procédé selon l'une quelconque des revendications 1 à 5, caractérisé en ce que les étapes d'écriture et de lecture sont séparées dans le temps.

7. Procédé selon l'une quelconque des revendications 2 à 5, caractérisé en ce que l'étape de lecture est initialisée pendant la seconde étape d'écriture.

8. Procédé selon l'une quelconque des revendications 1 à 7, caractérisé en ce que l'autorisation d'écriture "OPEN" dans un étage du registre à décalage est donnée par la formule suivante :

$$\underline{L} = 1 \text{ si } \varnothing . (\text{Suiv} + \text{Wo}) = 1$$

   dans laquelle L représente la valeur d'un circuit "LATCH", $\varnothing$ représente les phases $\varnothing$1 ou $\varnothing$2 du signal d'horloge selon qu'il s'agit d'un étage pair ou impair, Wo l'impulsion de validation d'écriture pendant la première étape d'écriture, Suiv le signal d'autorisation de l'étage suivant et . et + les opérations logiques, le dernier étage étant initialisé par la valeur Wo + R = 1 où R représente le signal de lecture.

9. Dispositif de commande d'un circuit du type premier entré - premier sorti pour la mise en oeuvre du procédé selon l'une quelconque des revendications 1 à 8, permettant de gérer m mots de n bits, m grand et n ≥ 1, ledit circuit comportant m étages en série, chacun des étages comprenant n points-mémoires montés en parallèle, les étages pairs étant commandés par un premier signal d'horloge ($\varnothing$1) et les étages impairs par un second signal d'horloge

($\varnothing$2). les signaux d'horloge ne se chevauchant pas, ledit dispositif comportant :

- des premiers moyens d'écriture par lesquels chaque mot est écrit, en fonction des signaux d'horloge ($\varnothing$1, $\varnothing$2), dans deux étages successifs, lesdits premiers moyens terminant l'écriture lorsque m/2 mots sont écrits ;
- des seconds moyens permettant, à chaque signal d'horloge, d'interdire successivement l'écriture dans le m$^{ième}$ étage jusque dans le premier étage, l'écriture étant réalisée par les premiers moyens d'écriture dans les étages non encore interdits ; et
- des moyens de lecture décalant successivement les mots d'un étage dans l'autre à chaque signal d'horloge, la lecture d'un mot étant réalisée à la fin du décalage ;

dispositif dans lequel les étages impairs ($E_1$, $E_3$,.. .) et les étages pairs ($E_2$, ....$E_m$) sont connectés aux signaux d'horloge ($\varnothing$1, $\varnothing$2) de telle sorte que les étages impairs reçoivent le premier signal d'horloge ($\varnothing$1) sur leur première entrée et le second signal d'horloge ($\varnothing$2) sur leur deuxième entrée tandis que les étages pairs reçoivent le second signal d'horloge ($\varnothing$2) sur leur première entrée et le premier signal d'horloge ($\varnothing$1) sur leur deuxième entrée, les étages impairs recevant une impulsion Wo$\varnothing$1 inversée et les étages pairs une impulsion Wo$\varnothing$2 inversée dans laquelle Wo représente une impulsion de validation d'écriture, une impulsion R de validation de lecture étant appliquée sur le dernier étage du registre à décalage.

10. Dispositif selon la revendication 9, caractérisé en ce que chaque étage comporte un circuit de commande constitué par un premier circuit NAND ($N_2$) recevant sur ses entrées respectivement soit Wo$\varnothing$1, soit Wo$\varnothing$2 suivant le type d'étages (pair ou impair) et une impulsion issue de l'étage suivant, un circuit "Latch" (L) recevant la sortie du circuit NAND et délivrant une impulsion vers l'étage précédent, ce circuit "Latch" étant commandé soit par le deuxième signal d'horloge ($\varnothing$2), soit par le premier signal d'horloge ($\varnothing$1), un second circuit NAND ($N_3$) recevant sur une entrée la sortie du circuit "Latch" (L) inversée par un inverseur ($I_{11}$) et sur son autre entrée soit le premier signal d'horloge ($\varnothing$11), soit le second signal d'horloge ($\varnothing$2), la sortie du second circuit NAND ($N_3$) étant envoyée sur l'étage proprement dit par l'intermédiaire d'un inverseur ($I_{12}$) pour autoriser ou interdire l'écriture dans cet étage.

## Claims

1. Process for controlling a circuit of the first-in first-out type making it possible to manage m words of n bits, m large and $n \geq 1$, the said circuit comprising m stages in series, each of the stages comprising n memory points mounted in parallel, the even stages being controlled by a first clock signal ($\varnothing$1) and the odd stages by a second clock signal ($\varnothing$2), the clock signals not overlapping, the said process comprising:

   - a first write step in which each word is written, as a function of the clock signals, into two successive stages, this first step terminating when m/2 words are written;
   - a second write step in which at each clock signal, writing into the m$^{th}$ stage down to the first stage is disabled in succession, writing being carried out according to the first step into the stages which are not yet disabled, and
   - a read step consisting in shifting the words from one stage into another in succession at each clock signal, the reading of a word being carried out at the end of the shifting.

2. Process of controlling a circuit of the first-in first-out type making it possible to manage m words of n bits, m large and $n \geq 1$, the said circuit comprising m stages in series, each of the stages comprising n memory points mounted in parallel, the even stages being controlled by a first clock signal ($\varnothing$1) and the odd stages by a second clock signal ($\varnothing$2), the clock signals not overlapping, the said process comprising:

   - a first write step in which each word is written, as a function of the clock signals, into two successive stages, this first step terminating when m/2 words are written;
   - a second write step in which at each clock signal, writing into the m$^{th}$ stage down to the first stage is disabled in succession, writing being carried out according to the first step into the stages which are not yet disabled, and
   - a read step consisting in shifting the words from one stage into another in succession at each clock signal, reading being carried out on the output stage every two clock signals.

3. Process according to either one of Claims 1 and 2, characterized in that the first ($\varnothing$1) and the second ($\varnothing$2) clock signal correspond to the two phases of the same clock signal.

4. Process according to Claim 3, characterized in that the clock signal at a frequency of greater than a MHz, preferably a frequency of 40.5 MHz.

5. Process according to any one of Claims 1 to 4, characterized in that, during a read step, the write steps are not authorized.

6. Process according to any one of Claims 1 to 5, characterized in that the write and read steps are separated in time.

7. Process according to any one of Claims 2 to 5, characterized in that the read step is initialized during the second write step.

8. Process according to any one of Claims 1 to 7, characterized in that the authorization to write "OPEN" into a stage of the shift register is given by the following formula:

$$\underline{L} = 1 \text{ if } \varnothing . (Subq + Wo) = 1$$

in which $\underline{L}$ represents the value of a "LATCH" circuit, $\varnothing$ represents the phases $\varnothing 1$ or $\varnothing 2$ of the clock signal depending on whether an even or odd stage is involved, Wo the write enable pulse during the first write step, Subq the authorization signal for the subsequent stage and . and + the logical operations, > the last stage being initialized by the value Wo + R = 1 where R represents the read signal.

9. Device for controlling a circuit of the first-in first-out type for the implementation of the process according to any one of Claims 1 to 8, making it possible to manage m words of n bits, m large and $n \geq 1$, the said circuit comprising m stages in series, each of the stages comprising n memory points mounted in parallel, the even stages being controlled by a first clock signal ($\varnothing 1$) and the odd stages by a second clock signal ($\varnothing 2$), the clock signals not overlapping, the said device comprising:

- first write means via which each word is written, as a function of the clock signals ($\varnothing 1$), ($\varnothing 2$), into two successive stages, the said first means terminating the writing when m/2 words are written;
- second means making it possible, at each clock signal, to disable in succession writing into the $m^{th}$ stage down to the first stage, writing being carried out by the first write means into the stages which are not yet disabled; and
- read means shifting the words from one stage into the other in succession at each clock signal, the reading of a word being carried out at the end of the shifting;

in which device the odd stages ($E_1, E_{3...}$) and the even stages ($E_2,... E_m$) are connected to the clock signals ($\varnothing 1$, $\varnothing 2$) in such a way that the odd stages receive the first clock signal ($\varnothing 1$) on their first input and the second clock signal ($\varnothing 2$) on their second input whilst the even stages receive the second clock signal ($\varnothing 2$) on their first input and the first clock signal ($\varnothing 1$) on their second input, the odd stages receiving an inverted pulse Wo$\varnothing 1$ and the even stages an inverted pulse Wo$\varnothing 2$ in which Wo represents a write enable pulse, a read enable pulse R being applied to the last stage of the shift register.

10. Device according to Claim 9, characterized in that each stage comprises a control circuit constituted by a first NAND circuit ($N_2$) receiving on its inputs respectively either Wo$\varnothing 1$ or Wo$\varnothing 2$ depending on the type of stage (even or odd) and a pulse emanating from the subsequent stage, a "Latch" circuit (L) receiving the output from the NAND circuit and delivering a pulse to the previous stage, is "Latch" circuit being controlled either by the second clock signal ($\varnothing 2$) or by the first clock signal ($\varnothing 1$), a second NAND circuit ($N_3$) receiving on an input the output from the "Latch" circuit (L), inverted by an inverter ($I_{11}$), and on its other input either the first clock signal ($\varnothing 1$), or the second clock signal ($\varnothing 2$), the output from the second NAND circuit ($N_3$) being sent to the stage proper by way of an inverter ($I_{12}$) for authorizing or disabling writing into this stage.

**Patentansprüche**

1. Verfahren zur Steuerung einer FIFO-Schaltung, die eine Verwaltung von m Wörtern mit n Bit ermöglicht, wobei m groß und $n \geq 1$ ist und wobei die Schaltung m Stufen in Reihe und jede Stufe n parallele Speicherpunkte enthält und die geradzahligen Stufen durch ein erstes Taktsignal ($\varnothing 1$) und die ungeradzahligen Stufen durch ein zweites Taktsignal ($\varnothing 2$) gesteuert werden und die Taktsignale einander nicht überlappen, enthaltend:

- einen ersten Schreibschritt, in dem jedes Wort in zwei aufeinanderfolgenden Stufen als Funktion der Taktsignale geschrieben wird und dieser erste Schritt beendet wird, wenn m/2 Wörter geschrieben sind,
- einen zweiten Schreibschritt, in dem bei jedem Taktsignal das Schreiben in die m-te Stufe gesperrt wird, bis in der ersten Stufe das Schreiben entsprechend der ersten Stufe in den noch nicht gesperrten Stufen erfolgt ist, und
- einen Leseschritt, der darin besteht, daß nacheinander bei jedem Taktsignal die Wörter einer Stufe in die andere geschoben werden und das Lesen eines Wortes am Ende der Verschiebung erfolgt.

2. Verfahren zur Steuerung einer FIFO-Schaltung, die eine Verwaltung von m Wörtern mit n Bit ermöglicht, wobei m groß und n ≥ 1 ist und wobei die Schaltung m Stufen in Reihe und jede Stufe n parallele Speicherpunkte enthält und die geradzahligen Stufen durch ein erstes Taktsignal ($\varnothing$1) und die ungeradzahligen Stufen durch ein zweites Taktsignal ($\varnothing$2) gesteuert werden und die Taktsignale einander nicht überlappen, enthaltend:

- einen ersten Schreibschritt, in dem jedes Wort in zwei aufeinanderfolgenden Stufen als Funktion der Taktsignale geschrieben wird und dieser erste Schritt beendet wird, wenn m/2 Wörter geschrieben sind,
- einen zweiten Schreibschritt, in dem bei jedem Taktsignal das Schreiben in die m-te Stufe gesperrt wird, bis in der ersten Stufe das Schreiben entsprechend der ersten Stufe in den noch nicht gesperrten Stufen erfolgt ist, und
- einen Leseschritt, der darin besteht, daß nacheinander bei jedem Taktsignal die Wörter einer Stufe in die andere geschoben werden, wobei das Lesen bei der Ausgangsstufe bei jedem zweiten Taktsignal erfolgt.

3. Verfahren nach einem der Ansprüche 1 oder 2, dadurch gekennzeichnet, daß das erste ($\varnothing$1) und das zweite ($\varnothing$2) Taktsignal zwei Phasen desselben Taktsignals entsprechen.

4. Verfahren nach Anspruch 3, dadurch gekennzeichnet, daß die Frequenz des Taktsignals größer als 1 MHz und vorzugsweise 40,5 MHz beträgt.

5. Verfahren nach einem der Ansprüche 1 bis 4, dadurch gekennzeichnet, daß die Schreibschritte während eines Leseschritts nicht freigegeben werden.

6. Verfahren nach einem der Ansprüche 1 bis 5, dadurch gekennzeichnet, daß die Schreib- und die Leseschritte zeitlich getrennt sind.

7. Verfahren nach einem der Ansprüche 2 bis 5, dadurch gekennzeichnet, daß der Leseschritt während des zweiten Schreibschritts ausgelöst wird.

8. Verfahren nach einem der Ansprüche 1 bis 7, dadurch gekennzeichnet, daß die Schreibfreigabe "OPEN" in einer Stufe des Schieberegisters durch die folgende Gleichung gegeben ist:

$$\underline{L} = 1 \text{ si } \varnothing. (\text{Suiv} + \text{Wo}) = 1$$

wobei $\underline{L}$ den Wert einer "LATCH"-Schaltung darstellt, $\varnothing$ die Phasen $\varnothing$1 oder $\varnothing$2 des Taktsignals darstellt, abhängig davon, ob es sich um eine geradzahlige oder ungeradzahlige Stufe handelt, Wo den Schreib-Gültigkeitsimpulsimpuls während des ersten Schreibschritts, Suiv das Freigabesignal für die folgende Stufe darstellt und . und + logische Operationen darstellen, wobei die letzte Stufe durch den Wert Wo + R = 1 ausgelöst wird, wobei R das Lesesignal darstellt.

9. Einrichtung zur Steuerung einer FIFO-Schaltung für die Durchführung des Verfahrens gemäß einem der Ansprüche 1 bis 8 zum Verwalten von m Wörtern mit n Bit, wobei m groß und n ≥ 1 ist, wobei die Schaltung m Stufen in Reihe enthält, jede der Stufen n parallele Speicherpunkte enthält und die geradzahligen Stufen durch ein erstes Taktsignal ($\varnothing$1) und die ungeradzahligen Stufen durch ein zweites Taktsignal ($\varnothing$2) gesteuert werden und die Taktsignale einander nicht überlappen, enthaltend:

- erste Schreibmittel, mit denen jedes Wort als Funktion der Taktsignale ($\varnothing$1, $\varnothing$2) in zwei aufeinanderfolgenden Stufen geschrieben wird, wobei die ersten Mittel das Schreiben beenden, wenn m/2 Wörter geschrieben sind,
- zweite Mittel, die bei jedem Taktsignal das aufeinanderfolgende Schreiben in die m-te Stufe verhindern, bis in der ersten Stufe das Schreiben durch die ersten Schreibmittel in den noch nicht gesperrten Stufen erfolgt ist, und

-   Lesemittel, die bei jedem Taktsignal nacheinander die Wörter von einer Stufe in die andere verschieben, wobei das Lesen eines Wortes am Ende der Verschiebung erfolgt,

eine Einrichtung, in der die ungeradzahligen Stufen ($E_1$, $E_3$....) und die geradzahligen Stufen ($E_2$, .....$E_m$) derart mit den Taktsignalen ($\varnothing 1$, $\varnothing 2$) verbunden sind, daß die ungeradzahligen Stufen das erste Taktsignal ($\varnothing 1$) an ihrem ersten Eingang und das zweite Taktsignal ($\varnothing 2$) an ihrem zweiten Eingang empfangen, während die geradzahligen Stufen das zweite Taktsignal ($\varnothing 2$) an ihrem ersten Eingang und das erste Taktsignal ($\varnothing 1$) an ihrem zweiten Eingang empfangen, wobei die ungeradzahligen Stufen einen invertierten Impuls Wo$\varnothing 1$ und die geradzahligen Stufen einen invertierten Impuls Wo$\varnothing 2$ empfangen, und Wo einen Schreib-Gültigkeitsimpuls darstellt und ein Lese-Gültigkeitsimpuls R der ersten Stufe des Schieberegisters zugeführt wird.

10. Einrichtung nach Anspruch 9, dadurch gekennzeichnet, daß jede Stufe eine Steuerschaltung mit einer ersten NAND ($N_2$)-Schaltung enthält, die an ihren Eingängen entweder Wo$\varnothing 1$ oder Wo$\varnothing 2$ empfängt, entsprechend dem Typ der Stufen (geradzahlig oder ungeradzahlig) und einen Impuls von der folgenden Stufe empfängt, wobei eine "LATCH" (L)-Schaltung das Ausgangssignal der NAND-Schaltung empfängt und einen Impuls an die vorangehende Stufe liefert, daß die "LATCH"-Schaltung entweder durch das zweite Taktsignal ($\varnothing 2$) oder durch das erste Taktsignal ($\varnothing 1$) gesteuert wird, daß eine zweite NAND ($N_3$)-Schaltung an ihrem Eingang das durch einen Inverter ($I_{11}$) invertierte Ausgangssignal der "LATCH" (L)-Schaltung und an ihrem anderen Eingang entweder das erste Taktsignal ($\varnothing 1$) oder das zweite Taktsignal ($\varnothing 2$) empfängt, daß der Ausgang der zweiten NAND ($N_3$)-Schaltung der eigentlichen Stufe durch einen Inverter ($I_{12}$) zugeführt wird, um das Schreiben in dieser Stufe freizugeben oder zu sperren.

FIG.1

FIG.2

FIG.3

FIG.4

FIG.5